# EUROPEAN PATENT APPLICATION

(11) **EP 3 900 536 A1**
(43) Date of publication of application: **27.10.2021**
(21) Application number: 19901219.6
(22) Date of filing: 20.12.2019
(51) Int. Cl.: A01N 37/02, A01P 21/00, A01N 25/02, A01G 7/06

(54) **AGENT FOR IMPROVING HEAT RESISTANCE OR SALT TOLERANCE OF PLANTS**

(30) Priority: 21.12.2018 JP 2018240193
(71) Applicant: AC-Planta Inc., Tokyo 113-0034 (JP)
(72) Inventor: KIM, Jongmyong, Tokyo 113-0034 (JP)
(74) Representative: Hoffmann Eitle
(86) International application number: PCT/JP2019/050186
(87) International publication number: WO 2020/130145

(57) **Abstract**

The present invention provides a heat tolerance or salt tolerance improving agent for plants, comprising acetic acid or a salt thereof, or a solvate thereof.

## Description

### Technical Field

The present invention relates to a heat tolerance or salt tolerance improving agent for plants.

### Background Art

As the population is now exploding, the production of plants serving as food in sufficient supplies is a matter of world concern. Also, the desertification of land ascribable to decrease in green space, etc. is problematic. In addition, for example, a rise in temperatures at the Earth's surface based on global warming phenomena is also problematic. Thus, the number of environmental problems associated with plant growth is increasing.

Specifically, excessive stresses on plants due to global environmental factors are often problematic to the growth of the plants.

One of the stresses on plants is drying stress.

To cope with the drying stress, attempts have been made on the development of genetically recombinant plants by engineering drying stress responsive genes or the application of chemical or biological regulating agents improving drying stress tolerance.

Patent Literature 1 discloses a method for improving the drying stress tolerance of a plant, comprising the step of applying 10 mM or higher acetic acid to the root of the plant by irrigation, and allowing the plant to grow under drying stress conditions.

Non Patent Literature 1 discloses a drought response network in which a plant acquires drying tolerance by the stimulation of a jasmonic acid signaling pathway which triggers the dynamic conversion of a metabolic flux from a glycolytic system to acetic acid synthesis.

### Citation List

### Patent Literature

Patent Literature 1: U.S. Patent No. 9,258,954

### Non Patent Literature

Non Patent Literature 1: Kim, J. M. et al., Nature Plants, Vol. 3, 17097 (2017)

### Summary of Invention

### Technical Problem

There exist stresses other than drying stress as stresses on plants in plant growth.

Accordingly, studies have been conducted by using whether tolerance to stresses at the time of plant growth in a high-temperature environment or in an environment such as saline soil can be imparted to plants as an index.

An object of the present invention is to provide an approach that can impart heat tolerance or salt tolerance to plants.

### Solution to Problem

The present inventor has conducted diligent studies to attain the object and consequently completed the present invention by finding that acetic acid, etc. contributes to the ability of a plant to grow favorably against heat stress or salt stress.

Specifically, the present invention is as follows.
(1)
   A heat tolerance or salt tolerance improving agent for plants, comprising acetic acid or a salt thereof, or a solvate thereof.
(2)
   The heat tolerance or salt tolerance improving agent according to (1), further comprising one or more solvents including at least water.
(3)
   The heat tolerance or salt tolerance improving agent according to (2), wherein a pH is in the range of 3 to 9.
(4)
   The heat tolerance or salt tolerance improving agent according to (2) or (3), wherein the acetic acid or a salt thereof is contained in the range of 0.01 to 0.5% by volume.
(5)
   A composition for improving the heat tolerance or salt tolerance of a plant, comprising acetic acid or a salt thereof, or a solvate thereof.
(6)
   The composition according to (5), further comprising one or more solvents including at least water.
(7)
   The composition according to (6), wherein a pH is in the range of 3 to 9.
(8)
   The composition according to claim 6 or 7, wherein the acetic acid or a salt thereof is contained in the range of 0.01 to 0.5% by volume.
(9)
   A method for improving the heat tolerance or salt tolerance of a plant, comprising applying acetic acid or a salt thereof, or a solvate thereof to the plant, a material for application to the plant, or soil, a medium, or a culture solution where the plant grows.
(10)
   A method for controlling the growth of a plant, comprising:
   obtaining one or more pieces of information on the growth of the plant; and
   on the basis of the obtained one or more pieces of information, determining conditions under which a heat tolerance or salt tolerance improving agent according to any of (1) to (4) or a composition according to any of (5) to (8) is applied to the plant, a material for application to the plant, or soil, a medium, or a culture solution where the plant grows.

### Advantageous Effects of Invention

The present invention can provide an approach that can impart heat tolerance or salt tolerance to plants.

### Brief Description of Drawings

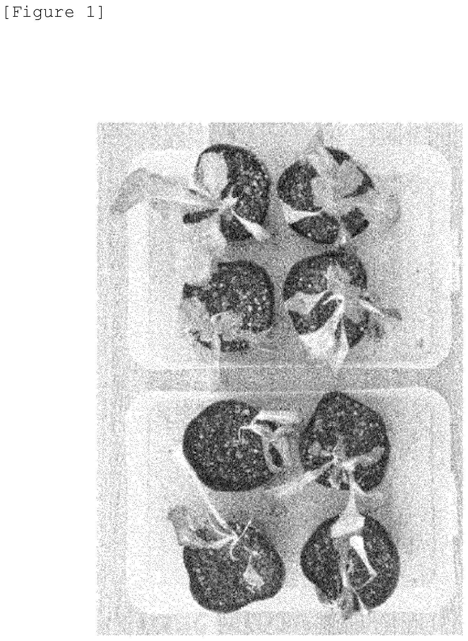

[Figure 1] Figure 1 is a diagram showing the results of heat tolerance test 1 using stem lettuce (*Lactuca sativa* L.) in Examples. The left side depicts a control group given water, and the right side depicts a group given an aqueous solution containing 0.1% by volume of acetic acid.

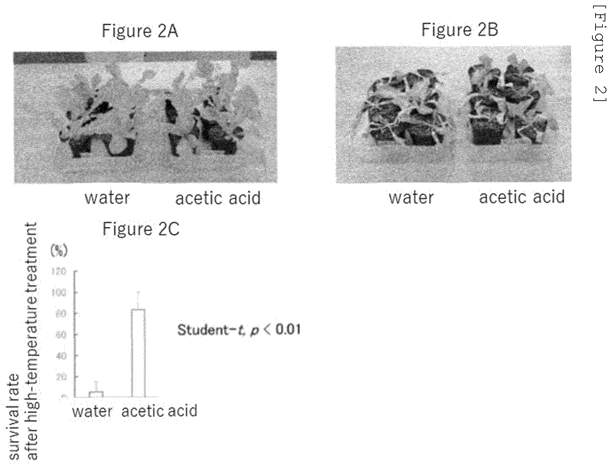

[Figure 2] Figure 2 is a diagram showing the results of heat tolerance test 2 using stem lettuce in Examples. In both Figures 2A and 2B, the left side depicts a control group given water, and the right side depicts a group given an aqueous solution containing 0.06% by volume of acetic acid. Figure 2A shows stem lettuce before growth under conditions of a temperature of 42°C. Figure 2B shows stem lettuce after growth under conditions of a temperature of 42°C. Figure 2C shows a graph of a survival rate.

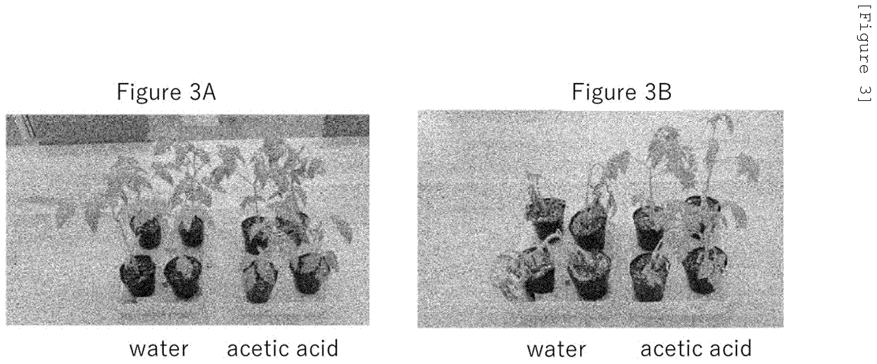

[Figure 3] Figure 3 is a diagram showing the results of heat tolerance test 3 using tomato (*Solanum lycopersicum*) in Examples. In both Figures 3A and 3B, the left side depicts a control group given water, and the right side depicts a group given an aqueous solution containing 0.06% by volume of acetic acid. Figure 3A shows tomato before growth under conditions of a temperature of 42°C. Figure 3B shows tomato after growth under conditions of a temperature of 42°C.

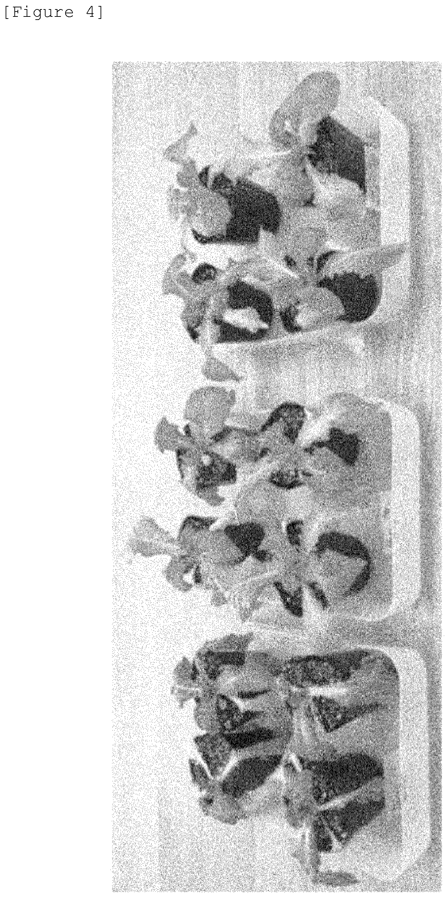

[Figure 4] Figure 4 is a diagram showing the results of salt tolerance test using stem lettuce in Examples. The left side depicts a control group given water, the middle side depicts a group given an aqueous solution containing 0.1% by volume of acetic acid, and the right side depicts a group given an aqueous solution containing 0.2% by volume of acetic acid.

### Description of Embodiments

Hereinafter, the embodiments of the present invention will be described in detail. However, the present invention is not limited by the embodiments given below, and can be carried out with various changes or modifications made therein.

The present invention provides a heat tolerance or salt tolerance improving agent for plants, comprising acetic acid or a salt thereof, or a solvate thereof (hereinafter, also referred to as "acetic acid, etc." in the present specification).

In the present invention, the heat tolerance and/or salt tolerance of a plant can be improved by applying the heat tolerance or salt tolerance improving agent for plants to the plant. The heat tolerance or salt tolerance improving agent for plants of the present invention may be a heat tolerance improving agent, may be a salt tolerance improving agent, or may be both of the heat tolerance improving agent and the salt tolerance improving agent.

The heat tolerance or salt tolerance improving agent for plants of the present invention can be used as an agricultural chemical or an agrochemical formulation.

In the present invention, tolerance to stresses at the time of plant growth in a high-temperature environment or in an environment such as saline soil, which has unfavorable influence on the plant growth, can be imparted to a plant by applying the heat tolerance or salt tolerance improving agent for plants to the plant. In the present specification, the imparting of tolerance to stresses at the time of plant growth to the plant does not mean that complete tolerance is conferred.

In the present invention, the heat tolerance or salt tolerance improving agent for plants comprises acetic acid, etc.

In this context, the acetic acid, etc. is not particularly limited as long as the acetic acid, etc. exerts characteristics as the heat tolerance or salt tolerance improving agent for plants. The heat tolerance or salt tolerance improving agent for plants contains the acetic acid, etc. as an active ingredient.

The active ingredient means that the acetic acid, etc. as the heat tolerance or salt tolerance improving agent for plants is an ingredient that exerts its characteristics.

The acetic acid, etc. used in the present invention may be acetic acid, etc. for industrial use or may be acetic acid, etc. for food use.

The acetic acid that may be used can be safe and inexpensive acetic acid such as pyroligneous acid which is also used for agricultural use, or fermented vinegar which is produced by fermentation or the like.

Use of such acetic acid, etc. as the heat tolerance or salt tolerance improving agent for plants of the present invention is suitable because of high safety and low cost.

The acetic acid, etc. used in the present invention may not only be acetic acid itself but may be a salt of acetic acid.

The salt of acetic acid is not particularly limited as long as the salt is capable of supplying an acetate ion. Examples thereof include salts with cations and specifically include sodium acetate, potassium acetate, calcium acetate, magnesium acetate, zinc acetate ions, and ammonium acetate.

The ammonium acetate may be acetate with substituted or unsubstituted ammonium instead of an ammonium ion.

Among them, potassium acetate, sodium acetate, ammonium acetate, magnesium acetate, or calcium acetate can be suitably used as the salt of acetic acid. Alternatively, a liquid fertilizer obtained by dissolving an eggshell in vinegar may be used as the acetic acid, etc.

In the present invention, acetic acid and acetate may be used as a mixture. The mixture of acetic acid and acetate may be a mixture of acetic acid itself with acetate or may be a mixed solution of acetic acid and acetate formed, for example, as an aqueous solution through neutralization reaction by adding a cation source that forms a salt with an acetate ion to the acetic acid. In this context, the acetic acid may be completely neutralized, or the cation source may be added in an amount that allows the acetic acid to be partially neutralized.

Examples of the aqueous solution containing acetate include acetate buffer solutions.

The acetic acid, etc. used in the present invention may be a solvate of acetic acid or a solvate of acetate.

Examples of the solvent capable of forming the solvate of the acetic acid or a salt thereof include, but are not particularly limited to, water, and organic solvents such as alcohols, dimethyl sulfoxide (DMSO), ethanolamine and ethyl acetate.

The alcohol may be a lower alcohol or may be a higher alcohol, for example. Examples of the lower alcohol include, but are not particularly limited to, saturated or unsaturated linear or branched alkyl alcohols having 1 to 6 carbon atoms, such as methanol, ethanol and 2-propanol (isopropyl alcohol). Examples of the higher alcohol include, but are not particularly limited to, saturated or unsaturated linear or branched alkyl alcohols having 7 or more carbon atoms, such as 1-heptanol and 1-octanol.

These solvents forming the solvate may each be used singly or may be two or more solvents.

In the case of using the solvate, for example, as an aqueous solution of the solvate, the acetic acid, etc. in the aqueous solution is not particularly limited by its form and may not be solvated.

In the present invention, the term "heat tolerance improving agent" or "improving heat tolerance" means that the application of the heat tolerance improving agent for plants of the present invention to a plant population can substantially reduce heat stress, which has unfavorable influence on plant growth, such as inability to grow (firing), poor growth (e.g., the whitening or yellowing of the whole plant or a portion thereof (e.g., leaves or flowers), decrease in root length or decrease in the number of leaves, or lodging), decrease in growth rate, or decrease in plant weight or crop yield.

Being the "heat tolerance improving agent" or "improving heat tolerance" can be confirmed by comparison with a control plant population to which the heat tolerance improving agent for plants of the present invention is not applied, and can usually be confirmed from 30% or more, preferably 50% or more, 60% or more, or 70% or more, more preferably 80% or more, further preferably 85% or more, particularly preferably 90% or more improvement in survival rate.

In the present specification, the "heat stress" means being left in an environment having a temperature of 60°C or lower. The temperature may be 50°C or lower in the environment or may be 45°C or lower in the environment.

Usually, considering that a constant temperature is on the order of 25°C, an environment of 30°C or higher is preferred, and an environment of 35°C or higher is more preferred.

In the present specification, the "heat stress" may mean being left in an environment having a temperature in the range of 30 to 60°C. The upper limit and the lower limit may be set within the temperature range.

In the present invention, the confirmation of being the "heat tolerance improving agent" or "improving heat tolerance" is not particularly limited. This may be evaluated by the following approach and more specifically, may be evaluated by a method described in Examples.

For example, targeted plants are allowed to grow under usual growth conditions, i.e., under non-heat-stress conditions, in a given amount of a test solution (containing water and optionally a usual nutrient component). After growth for a given period, the heat tolerance improving agent is applied to the plants, which are then allowed to grow under heat stress conditions and subsequently grow under usual growth conditions, i.e., under non-heat-stress conditions. The survival rate of the targeted plants can be measured for evaluation.

The heat stress conditions can be conditions involving still standing for 30 minutes or longer under the temperature conditions of the "heat stress". The time of still standing may be set according to the temperature conditions.

The heat stress conditions are preferably conditions involving still standing without particular water supply under constant humidity conditions.

In the present invention, the term "salt tolerance improving agent" or "improving salt tolerance" means that the application of the salt tolerance improving agent for plants of the present invention to a plant population can substantially reduce salt stress, specifically, high-concentration salt stress, which has unfavorable influence on plant growth, such as inability to grow (firing), poor growth (e.g., the whitening or yellowing of the whole plant or a portion thereof (e.g., leaves or flowers), decrease in root length or decrease in the number of leaves, or lodging), decrease in growth rate, or decrease in plant weight or crop yield.

Being the "salt tolerance improving agent" or "improving salt tolerance " can be confirmed by comparison with a control plant population to which the salt tolerance improving agent for plants of the present invention is not applied, and can usually be confirmed from 30% or more, preferably 50% or more, 60% or more, or 70% or more, more preferably 80% or more, further preferably 85% or more, particularly preferably 90% or more improvement in survival rate.

In the present specification, the "salt stress" means being left in an environment having a high concentration of a salt.

The concentration of the salt is not particularly limited and can be a salt concentration in soil classified as saline soil.

The salt that causes the salt stress is not particularly limited and can be a salt, such as phosphate, nitrate, or hydrochloride, which is observed in saline soil.

Specific examples of the salt include alkali metal salts, alkaline earth metal salts, and ammonium salts of phosphoric acid, nitric acid, or hydrochloric acid, such as sodium chloride and magnesium hydrochloride.

In the present invention, the confirmation of being the "salt tolerance improving agent" or "improving salt tolerance" is not particularly limited. This may be evaluated by the following approach and more specifically, may be evaluated by a method described in Examples.

For example, targeted plants are allowed to grow under usual growth conditions, i.e., under non-salt-stress conditions, in a given amount of a test solution (containing water and optionally a usual nutrient component). After growth for a given period, the salt tolerance improving agent is applied to the plants, which are then allowed to grow under salt stress conditions and subsequently grow under usual growth conditions, i.e., under non-salt-stress conditions. The survival rate of the targeted plants can be measured for evaluation.

The salt stress conditions can be conditions involving still standing for 30 minutes or longer under the temperature conditions of the "salt stress". The time of still standing may be set according to the type of the salt or the concentration conditions.

The salt stress conditions may be conditions involving still standing with water supply under constant humidity conditions or may be conditions involving still standing without water supply.

In the present invention, the heat tolerance or salt tolerance improving agent for plants may be a heat tolerance improving agent for plants, may be a salt tolerance improving agent for plants, or may be the heat tolerance improving agent for plants while being the salt tolerance improving agent for plants.

In the present invention, the heat tolerance or salt tolerance improving agent for plants may be a composition for improving the heat tolerance or salt tolerance of a plant, the composition comprising acetic acid, etc.

Specifically, in the present specification, the "heat tolerance or salt tolerance improving agent for plants" may be interpreted as having the same meaning as the "composition for improving the heat tolerance or salt tolerance of a plant".

In each aspect of the present invention, the effect of the heat tolerance or salt tolerance improving agent for plants may include an effect on the growth itself of a plant, for example, a growth promoting effect such as the elongation of leaves and stems or roots, increase in the number of leaves, the promotion of flowering or fruition, increase in the number of flowers or fruits, increase in plant weight or crop yield, greening, or the promotion of tillering.

In the present invention, heat tolerance or salt tolerance to heat stress or salt stress can be improved by applying acetic acid, etc. to a plant.

The heat tolerance or salt tolerance improving agent for plants or the composition for improving the heat tolerance or salt tolerance of a plant according to the present invention can be used as an agrochemical formulation or an agricultural chemical for promoting plant growth.

In the present invention, the heat tolerance or salt tolerance improving agent for plants may be in an arbitrary form, for example, a solid (e.g., a powder or grains), a liquid (e.g., a solution or a suspension), or a gas.

In the present invention, the heat tolerance or salt tolerance improving agent for plants is preferably used in the form of a liquid such as a solution or a suspension.

In the present invention, in the case of using the heat tolerance or salt tolerance improving agent for plants as a solution, the solution may be in a liquid state or may be used as a liquid prepared just before use for application.

In the heat tolerance or salt tolerance improving agent for plants of the present invention, preferably, the acetic acid, etc. may be used singly as an active ingredient or may be used in combination with one or more agriculturally acceptable components.

The heat tolerance or salt tolerance improving agent for plants of the present invention can be formulated as an agricultural chemical or an agrochemical formulation into various dosage forms usually used in the art according to the desired application method.

The heat tolerance or salt tolerance improving agent for plants of the present invention may further contain one or more agriculturally acceptable components, in addition to the acetic acid, etc.

Examples of the agriculturally acceptable component includes solvents or carriers, excipients, binders, solubilizers, stabilizers, thickeners, puffing agents, lubricants, surfactants, oily liquids, buffers, germicides, antifreezes, antifoaming agents, colorants, antioxidants, additives, fertilizers, and other agents.

The agriculturally acceptable solvent or carrier is preferably an agriculturally acceptable solvent or liquid carrier such as water, a mineral oil fraction such as kerosene or diesel fuel, a plant- or animal-derived oil, cyclic or aromatic hydrocarbon (e.g., paraffin, tetrahydronaphthalene, alkylated naphthalenes or their derivatives, or alkylated benzenes or their derivatives), an alcohol (e.g., methanol, ethanol, propanol, butanol, ethylene glycol, glycerol or cyclohexanol), ketone (e.g., cyclohexanone), or amine (e.g., N-methylpyrrolidone), or a mixture thereof, more preferably one or more solvents including at least water.

The fertilizer is preferably an organic fertilizer such as oil cake or bovine feces, or an inorganic fertilizer such as ammonium sulfate, lime nitrogen or fused phosphate.

When the heat tolerance or salt tolerance improving agent for plants of the present invention further contains one or more solvents including at least water, the pH of the solution of the heat tolerance or salt tolerance improving agent for plants of the present invention is preferably in the range of 3 to 9. Within this range, the lower limit value of the pH may be 4 or higher, 5 or higher, or 6 or higher, and the upper limit value of the pH may be 8.5 or lower, 8 or lower, 7.5 or lower, or 7 or lower.

The range of the pH is more preferably the range of 4 to 8, further preferably the range of 5 to 7.5, still further preferably the range of 5 to 7. The range of the pH may be 5 to 6 or may be 6 to 7.

The pH of the heat tolerance or salt tolerance improving agent for plants preferably falls within the above range at the point in time when heat tolerance or salt tolerance improving agent for plants is applied to a target plant.

The pH of the heat tolerance or salt tolerance improving agent for plants of the present invention may be adjusted with an acid or an alkali and may be adjusted using, for example, an acid, an alkali or a buffer, such as hydrochloric acid, nitric acid, sulfuric acid, sodium hydroxide, potassium hydroxide, ammonia water or ammonium acetate.

For the heat tolerance or salt tolerance improving agent for plants of the present invention, its pH preferably falls within the above range at the point in time when the heat tolerance or salt tolerance improving agent for plants is applied to a target plant. However, even if the pH falls outside the above range at the point in time when the heat tolerance or salt tolerance improving agent for plants is applied to a target plant, the pH may be adjusted to within the above range through the use of the pH buffering effect of soil, a medium or a culture solution for application.

When the heat tolerance or salt tolerance improving agent for plants of the present invention further contains one or more solvents including at least water, the proportion of the acetic acid, etc. to the total volume in the heat tolerance or salt tolerance improving agent for plants of the present invention is preferably in the range of 0.01 to 0.5% by volume. Within this range, the lower limit value of the proportion may be 0.05% by volume or more, 0.075% by volume or more, 0.09% by volume or more, or 0.1% by volume or more, and the upper limit value of the proportion may be 0.25% by volume or less or 0.2% by volume or less.

The range of the proportion of the acetic acid, etc. is more preferably the range of 0.05 to 0.5% by volume, further preferably the range of 0.075 to 0.25% by volume, still further preferably the range of 0.09 to 0.2% by volume, particularly preferably the range of 0.1 to 0.2% by volume.

When the heat tolerance or salt tolerance improving agent for plants of the present invention further contains one or more solvents including at least water, the concentration of the acetic acid, etc. in the heat tolerance or salt tolerance improving agent for plants of the present invention is preferably in the range of 1 to 100 mM. Within this range, the lower limit value of the concentration may be 2 mM or higher, 5 mM or higher, 7.5 mM or higher, 9 mM or higher, or 10 mM or higher, and the upper limit value of the concentration may be 50 mM or lower or 40 mM or lower.

The range of the proportion of the acetic acid, etc. is more preferably the range of 1 to 50 mM, further preferably the range of 7.5 to 50 mM, still further preferably the range of 9 to 40 mM, particularly preferably the range of 10 to 40 mM.

When the heat tolerance or salt tolerance improving agent for plants of the present invention further contains one or more solvents including at least water, preferably, the pH falls within the above range and the concentration of the acetic acid, etc. falls within the above range.

The pH and the concentration can be appropriately selected together or each independently within the above ranges.

The heat tolerance or salt tolerance improving agent for plants of the present invention may further contain one or more additional agents.

Examples of the agent include, but are not particularly limited to, auxin, gibberellin, cytokinin, 2-chloroethylphosphonic acid (trade name: ESREL(R)), carbide, benzyladenine, brassinosteroid, strigolactone and jasmonic acid. The agent may be a phytohormone, a plant chemical regulating agent and an agricultural chemical, etc. usually used in the art.

In the present invention, the targeted plant is not particularly limited and is selected from, for example, an angiosperm and a gymnosperm.

Examples of the targeted plant include, but are not particularly limited to, plants of the family *Compositae* such as florists' daisy (*Chrysanthemum morifolium*) and gerbera (*Gerbera jamesonii*), plants of the family *Solanaceae* such as potato (*Solanum tuberosum*), tomato (*Solanum lycopersicum*) and eggplant (*Solanum melongena*), plants of the family *Brassicaceae* such as rape (*Brassica napus* L.) and turnip rape (*Brassica rapa* L. var. *nippo-oleifera*), plants of the family *Poaceae* such as rice (*Oryza sativa*), corn (*Zea mays*), wheat (*Triticum* L.), sugar cane (*Saccharum officinarum*) and barley (*Hordeum vulgare*), plants of the family *Fabaceae* such as soybean (*Glycine max*), plants of the family *Convolvulaceae* such as morning glory (*Ipomoea nil*), plants of the family *Salicaceae* such as poplar (*Populus nigra* var. *italica*), plants of the family *Euphorbiaceae* such as castor-oil plant (*Ricinus communis*), cassava (*Manihot esculenta*) and Barbados nut (*Jatropha curcas*), plants of the family *Convolvulaceae* such as sweet potato (*Ipomoea batatas*), plants of the family *Rutaceae* such as orange (*Citrus sinensis*) and lemon (*Citrus limon*), plants of the family *Rosaceae* such as Japanese cherry (*Prunus lannesiana* cv.) and rose (*Rosa* sp.), plants of the family *Orchidaceae* such as orchid (*Phalaenopsis aphrodite*), plants of the family *Gentianaceae* such as showy prairie gentian (*Eustoma grandiflorum*), plants of the family *Primulaceae* such as cyclamen (*Cyclamen persicum* cv.), plants of the family *Violaceae* such as pansy (*Viola × wittrockiana*), plants of the family *Liliaceae* such as lily (*Lilium* L.), plants of the family *Amaranthaceae* such as sugar beet (*Beta vulgaris* ssp. *vulgaris*), plants of the family *Vitaceae* such as grape (*Vitis* spp.), plants of the family *Cupressaceae* such as cryptomeria (*Cryptomeria japonica*) and hinoki cypress (*Chamaecyparis obtusa*), plants of the family *Oleaceae* such as olive (*Olea europaea*) and sweet tea (*Osmanthus fragrans* var. *aurantiacus*), and plants of the family *Pinaceae* such as Japanese red pine (*Pinus densiflora*)*.*

The targeted plant of the heat tolerance or salt tolerance improving agent for plants of the present invention has a common mechanism related to acetic acid metabolism including acetic acid synthesis. Accordingly, the acetic acid, etc. is probably capable of exerting heat tolerance or salt tolerance on plants in common by the action of a functional gene group commonly preserved in the plants, regardless of species.

The targeted plant may not only be the whole plant (i.e., the whole body of the plant) but may be a portion of the plant, such as a plant tissue or organ (e.g., cut flowers, or vegetative reproductive organs such as rhizomes, tuberous roots, corms or runners), cultured cells and/or calluses.

The heat tolerance or salt tolerance improving agent for plants of the present invention can be applied to the whole plant or a portion thereof (e.g., seeds, seedlings or the whole mature plant or a portion thereof) at an arbitrary stage of growth including before and after budding of the plant.

The heat tolerance or salt tolerance improving agent for plants of the present invention may be applied not only to a plant itself but to a material for application to the plant, or soil, a medium, or a culture solution where the plant grows.

The present invention also relates to a method for improving the heat tolerance or salt tolerance of a plant, comprising applying acetic acid, etc., preferably an agriculturally effective amount of acetic acid, etc., to the plant, a material for application to the plant, or soil, a medium, or a culture solution where the plant grows.

In the method of the present invention, the acetic acid, etc. to be applied and other aspects are as described about the heat tolerance or salt tolerance improving agent for plants in the present specification.

Examples of the material for application to the plant include, but are not particularly limited to, various materials usually used in the art, such as water and fertilizers.

The dosage form of the heat tolerance or salt tolerance improving agent for plants of the present invention is not particularly limited and can be a dosage form, such as an emulsion, a wettable powder, a solution, an aqueous solution, a dust, a powder, a paste, or granules, usually used in the art.

In each aspect of the present invention, the acetic acid, etc. is contained or applied in an agriculturally effective amount. In each aspect of the present invention, the agriculturally effective amount of the acetic acid, etc. is, for example, in the range of 0.01 to 0.5% by mass with respect to the total mass at the time of application, usually in the range of 0.05 to 0.5% by mass with respect to the total mass at the time of application, typically in the range of 0.075 to 0.25% by mass with respect to the total mass at the time of application, more typically in the range of 0.09 to 0.2% by mass with respect to the total mass at the time of application, particularly, in the range of 0.1 to 0.2% by mass with respect to the total mass at the time of application. When the heat tolerance or salt tolerance improving agent for plants of the present invention is, for example, in a liquid dosage form, the agriculturally effective amount of the acetic acid, etc. is, for example, in the range of 0.01 to 0.5% by volume with respect to the total volume at the time of application, usually in the range of 0.05 to 0.5% by volume with respect to the total volume at the time of application, typically in the range of 0.075 to 0.25% by volume with respect to the total volume at the time of application, more typically in the range of 0.09 to 0.2% by volume with respect to the total mass at the time of application, particularly, in the range of 0.1 to 0.2% by volume with respect to the total mass at the time of application.

In plant cultivation, conditions under which the heat tolerance or salt tolerance improving agent for plants of the present invention is applied to the plant, a material for application to the plant, or soil, a medium, or a culture solution where the plant grows can be appropriately set on the basis of the growth status of the plant. As a result, the growth of the plant can be stably controlled while the heat tolerance or salt tolerance of the plant can be improved.

The present invention also relates to a method for controlling the growth of a plant, comprising:
obtaining one or more pieces of information on the growth of the plant (hereinafter, also referred to as an "information obtainment step"); and
on the basis of the obtained one or more pieces of information, determining conditions under which the heat tolerance or salt tolerance improving agent for plants of the present invention is applied to the plant, a material for application to the plant, or soil, a medium, or a culture solution where the plant grows (hereinafter, also referred to as an "application condition determination step").

Examples of the one or more pieces of information on the growth of the plant to be obtained in the information obtainment step can include, but are not particularly limited to, various pieces of information on growth promoting effects such as the elongation of leaves and stems or roots, increase in the number of leaves, the promotion of flowering or fruition, increase in the number of flowers or fruits, increase in plant weight or crop yield, greening, and the promotion of tillering, and various pieces of information on unfavorable influence on plant growth, such as inability to grow (firing), poor growth (e.g., the whitening or yellowing of the whole plant or a portion thereof (e.g., leaves or flowers), decrease in root length or decrease in the number of leaves, or lodging), decrease in growth rate, and decrease in plant weight or crop yield, under heat stress or salt stress conditions.

The growth status of the plant can be evaluated by obtaining the one or more pieces of information listed above.

The conditions for applying the heat tolerance or salt tolerance improving agent for plants of the present invention to be determined in the application condition determination step are appropriately set such that the heat tolerance or salt tolerance of the plant can be improved by carrying out the application. Examples of the conditions to be determined in this step include, but are not particularly limited to, one or more conditions selected from the group consisting of the composition, pH, amount applied and timing of application of the heat tolerance or salt tolerance improving agent for plants of the present invention, and the content of the acetic acid, etc. contained as an active ingredient.

Specific values of these conditions can be appropriately set from the ranges listed in the present specification.

In the method for controlling the growth of a plant according to the present invention, the number and order of the information obtainment step and the application condition determination step are not particularly limited. For example, the information obtainment step and the application condition determination step may be carried out once each in this order; the information obtainment step, the application condition determination step, and subsequently another round of the information obtainment step may be carried out in this order; and the information obtainment step and the application condition determination step may be repetitively carried out a plurality of times in combination, such as a first round of the information obtainment step, a first round of the application condition determination step, a second round of the information obtainment step, and a second round of the application condition determination step.

### Examples

Hereinafter, the present invention will be described further specifically with reference to Examples. However, the technical scope of the present invention is not limited by these Examples.

### <Heat tolerance test 1>

In a simply prepared incubator, stem lettuce (*Lactuca sativa* L. of the family *Compositae*) was budded and then raised for 2 weeks under conditions involving a temperature of 22°C and a humidity of 40 to 50% in a vinyl pot. During the cultivation period, bottom water supply was performed as water supply using a water supply tray such that the bottom of the vinyl pot was dipped in water.

Subsequently, extra water at the time of bottom water supply was removed by natural dropping on a dry water supply tray.

Bottom water supply was performed for 24 hours with a water supply tray using water or an aqueous solution containing 0.1% by volume of acetic acid. This bottom water supply treatment supplied water or the aqueous acetic acid solution to the stem lettuce from the bottom of the vinyl pot.

Then, the vinyl pot was transferred to another tray, which was then left standing for 4 days in an incubator under conditions involving continuous light and a temperature of 35°C without water supply.

The vinyl pot thus left standing for 4 days was taken out of the incubator, and bottom water supply was performed under conditions involving a temperature of 22°C. The state of the stem lettuce was observed 24 hours later.

The results are shown in Figure 1.

In the tests given below, stem lettuce and tomato were allowed to grow under continuous light, whereas conditions involved approximately 5000 lx except that illuminance in an incubator under conditions involving a temperature of 42°C was set to approximately 3300 lx.

### <Heat tolerance test 2>

Stem lettuce allowed to grow in the same way as in the heat tolerance test 1 was irrigated, at its root, with 50 mL of water or an aqueous solution containing 0.1% by volume of acetic acid per individual, and left standing for 24 hours. The irrigation treatment supplied water or the aqueous acetic acid solution to the stem lettuce from the soil surface in the vinyl pot.

Then, the vinyl pot was left standing for 3 days in an incubator under conditions involving continuous light and a temperature of 42°C without water supply.

The vinyl pot thus left standing for 3 days was taken out of the incubator, and bottom water supply was performed under conditions involving a temperature of 22°C. The survival rate of the stem lettuce was measured 2 days later.

The results are shown in Figure 2.

### <Heat tolerance test 3>

In a simply prepared incubator, tomato (breed: Momotaro, *Solanum lycopersicum* of the family *Solanaceae*) was budded and then raised for 3 weeks under conditions involving a temperature of 22°C and a humidity of 40 to 50% in a vinyl pot. During the cultivation period, bottom water supply was performed as water supply using a water supply tray such that the bottom of the vinyl pot was dipped in water.

Subsequently, extra water at the time of bottom water supply was removed by natural dropping on a dry water supply tray.

The tomato was irrigated, at its root, with 50 mL of water or an aqueous solution containing 0.06% by volume of acetic acid per individual, and left standing for 24 hours. The irrigation treatment supplied water or the aqueous acetic acid solution to the tomato from the soil surface in the vinyl pot.

Then, the vinyl pot was left standing for 3 days in an incubator under conditions involving continuous light and a temperature of 42°C without water supply.

The vinyl pot thus left standing for 3 days was taken out of the incubator, and bottom water supply was performed under conditions involving a temperature of 22°C. The survival rate of the tomato was measured 2 days later. The survival rate of the tomato in the group given the aqueous acetic acid solution was 100%, whereas the survival rate of the tomato in the group given water was 0%.

The results are shown in Figure 3.

### <Salt tolerance test>

Stem lettuce allowed to grow in the same way as in the heat tolerance test 1 was irrigated with 100 mL of water or an aqueous solution containing 0.1% by volume of acetic acid or an aqueous solution containing 0.2% by volume of acetic acid per individual, and left standing for 24 hours. The irrigation treatment supplied water or the aqueous acetic acid solution to the stem lettuce from the soil surface in the vinyl pot.

The stem lettuce was irrigated, at its root, with 100 mL of an aqueous solution containing 3.5% of sodium chloride per individual, and left standing for 3 days. Subsequently, the stem lettuce was irrigated, at its root, with 100 mL of an aqueous solution containing 3.5% of sodium chloride per individual.

The state of the stem lettuce was observed 7 days after the initial irrigation with the aqueous sodium chloride solution.

The results are shown in Figure 4.

## Claims

1. A heat tolerance or salt tolerance improving agent for plants, comprising acetic acid or a salt thereof, or a solvate thereof.

2. The heat tolerance or salt tolerance improving agent according to claim 1, further comprising one or more solvents including at least water.

3. The heat tolerance or salt tolerance improving agent according to claim 2, wherein a pH is in the range of 3 to 9.

4. The heat tolerance or salt tolerance improving agent according to claim 2 or 3, wherein the acetic acid or a salt thereof is contained in the range of 0.01 to 0.5% by volume.

5. A composition for improving heat tolerance or salt tolerance of a plant, comprising acetic acid or a salt thereof, or a solvate thereof.

6. The composition according to claim 5, further comprising one or more solvents including at least water.

7. The composition according to claim 6, wherein a pH is in the range of 3 to 9.

8. The composition according to claim 6 or 7, wherein the acetic acid or a salt thereof is contained in the range of 0.01 to 0.5% by volume.

9. A method for improving heat tolerance or salt tolerance of a plant, comprising applying acetic acid or a salt thereof, or a solvate thereof to the plant, a material for application to the plant, or soil, a medium, or a culture solution where the plant grows.
